# EUROPÄISCHE PATENTANMELDUNG

(11) **EP 4 506 621 A1**
(43) Veröffentlichungstag der Anmeldung: **12.02.2025**
(21) Anmeldenummer: 24188066.5
(22) Anmeldetag: 11.07.2024
(51) Int. Cl.: F24C 7/08, F24C 15/32, H05B 6/64, G01N 9/36

(54) **BETRIEBSVERFAHREN FÜR EIN GERÄT MIT EINEM LÜFTER UND GERÄT MIT EINEM LÜFTER**

(30) Priorität: 08.08.2023 BE 202305664
(71) Anmelder: Miele & Cie. KG, 33332 Gütersloh (DE)
(72) Erfinder: Warkentin, Michelle, 33106 Paderborn (DE); Ribbe, Patrick, 33378 Rheda-Wiedenbrück (DE); Zarth, Adelheid, 33332 Gütersloh (DE); Neugebauer, Johannes, 32457 Porta Westfalica (DE)

(57) **Zusammenfassung**

Die Erfindung betrifft ein Betriebsverfahren für ein Gerät (2) mit einem Lüfter (8) zur Umwälzung eines Gasgemischs in einem Behandlungsraum (4) des Geräts (2), wonach das Gerät (2) zumindest teilweise in Abhängigkeit einer Relation zwischen einer elektrischen Aufnahmeleistung des Lüfters (8) und einer Dichte des Gasgemischs betrieben wird, wobei das Betriebsverfahren eine Mehrzahl von Betriebsmodi umfasst und lediglich bei einem Teil dieser Betriebsmodi ein Regelbetrieb des Lüfters (8) zur Umwälzung des Gasgemischs in dem Behandlungsraum (4) gewünscht ist, dadurch gekennzeichnet, dass der Lüfter (8) in dem mindestens einen Betriebsmodi, in dem eine Umwälzung des Gasgemischs in dem Behandlungsraum (4) nicht gewünscht ist, in einem Messbetrieb betrieben wird, in dem die vorgenannte Relation ermittelbar und für den Betrieb des Geräts (2) nutzbar ist und gleichzeitig eine Umwälzung des Gasgemischs in dem Behandlungsraum (4) kleiner als bei dem Regelbetrieb des Lüfters (8) ist.

Ferner betrifft die Erfindung ein Gerät (2) mit einem Lüfter (8).

## Beschreibung

Die Erfindung betrifft ein Betriebsverfahren für ein Gerät mit einem Lüfter und ein Gerät mit einem Lüfter nach dem Oberbegriff des Patentanspruchs 10.

Aus dem Stand der Technik sind derartige Geräte mit einem Lüfter und Verfahren zu deren Betrieb bereits bekannt. Beispielsweise ist aus der EP 1 342 414 A1 ein Verfahren zum Erfassen der Feuchte in einem Gerät zur Behandlung und Zubereitung von Nahrungsmitteln sowie ein Gerät zur Behandlung und Zubereitung von Nahrungsmitteln bekannt. Bei dem Verfahren werden aktuelle Temperaturwerte und Drehzahlwerte des eine Gasförder- und -umwälzeinrichtung antreibenden Asynchronmotors mit wenigstens einer Kennlinie, die in einem Rechner hinterlegt ist, verglichen, und aus der Abweichung der gemessenen Drehzahl von der Drehzahl der hinterlegten Kennlinie die aktuelle Feuchte im Gasgemisch bestimmt. Nachteilig hieran ist, dass die Genauigkeit des Verfahrens des EP 1 342 414 A1 von der Qualität der im Rechner hinterlegten Kennlinie sowie von der Qualität der erfassten Drehzahlwerte des Asynchronmotors abhängt. Ist einer dieser Werte und sind insbesondere beide diese Werte selbst ungenau, führt dies zu einem entsprechend ungenauen Rückschluss auf die Feuchte im geschlossenen Garraum während des Garprozesses.

Der Erfindung stellt sich somit das Problem, ein Gerät mit einem Lüfter und ein Betriebsverfahren für das Gerät mit einem Lüfter zu verbessern.

Erfindungsgemäß wird dieses Problem durch ein Betriebsverfahren für ein Gerät mit den Merkmalen des Patentanspruchs 1 gelöst, wonach das Gerät zumindest teilweise in Abhängigkeit einer Relation zwischen einer elektrischen Aufnahmeleistung des Lüfters und einer Dichte des Gasgemischs betrieben wird oder werden kann, wobei das Betriebsverfahren eine Mehrzahl von Betriebsmodi umfasst und lediglich bei einem Teil dieser Betriebsmodi ein Regelbetrieb des Lüfters zur Umwälzung des Gasgemischs in dem Behandlungsraum gewünscht ist. Alternativ kann auch lediglich dem Benutzer die bestimmte Feuchtigkeit angezeigt werden.

Das erfindungsgemäße Betriebsverfahren ist dadurch gekennzeichnet, dass der Lüfter in dem mindestens einen Betriebsmodi, in dem eine Umwälzung des Gasgemischs in dem Behandlungsraum nicht gewünscht ist, in einem Messbetrieb betrieben wird, in dem die vorgenannte Relation ermittelbar und für den Betrieb des Geräts nutzbar ist und gleichzeitig eine Umwälzung des Gasgemischs in dem Behandlungsraum kleiner als bei dem Regelbetrieb des Lüfters ist. Ferner wird dieses Problem durch ein Gerät mit den Merkmalen des Patentanspruchs 10 gelöst. Vorteilhafte Ausgestaltungen und Weiterbildungen der Erfindung ergeben sich aus den nachfolgenden Unteransprüchen.

Der mit der Erfindung erreichbare Vorteil besteht insbesondere darin, dass ein Gerät mit einem Lüfter und ein Betriebsverfahren für das Gerät mit einem Lüfter verbessert sind. Aufgrund der erfindungsgemäßen Ausbildung des Betriebsverfahrens und des Geräts ist es beispielsweise möglich, die Feuchte des Gasgemischs, zum Beispiel eines Luft-Wasser-Gemisches, in dem Behandlungsraum, beispielsweise eines Garraums eines als Gargerät ausgebildeten Geräts, auch in Betriebsmodi des erfindungsgemäßen Betriebsverfahrens, bei denen eine Umwälzung in dem Behandlungsraum nicht gewünscht ist, also grundsätzlich nicht vorgesehen ist, ebenfalls mittels der während des Regelbetriebs des Lüfters, also in Betriebsmodi, bei denen eine Umwälzung in dem Behandlungsraum gewünscht ist, also explizit vorgesehen ist, verwendeten elektrischen Leistungsaufnahme des Elektromotors des Lüfters, zum Beispiel zur automatischen Ermittlung der Feuchte in dem Behandlungsraum des Geräts, zu ermitteln. Gleichzeitig kann mithilfe der Erfindung aber das grundsätzliche Gepräge, also die grundsätzliche Charakteristik dieser Betriebsmodi, bei denen die vorgenannte Umwälzung des Gasgemischs durch erzwungene Konvektion nicht erwünscht ist (jedoch eine natürliche Konvektion aufgrund von Temperaturunterschieden zu einer Zirkulation des Gasgemischs führen kann), also grundsätzlich nicht vorgesehen ist, beibehalten werden. Entsprechend ist auch für diese Betriebsmodi des erfindungsgemäßen Betriebsverfahrens kein expliziter Feuchtesensor zur Ermittlung der Feuchte des Gasgemischs erforderlich. Bei einem als Gargerät ausgebildeten erfindungsgemäßen Gerät mit einem als Garraum ausgebildeten Behandlungsraum können die Betriebsmodi, bei denen eine Umwälzung des Gasgemischs in dem Behandlungsraum grundsätzlich nicht vorgesehen ist, beispielsweise als ein Oberhitze-Betriebsmodus, Grill-Betriebsmodus und/oder als ein Unterhitze-Betriebsmodus, oder allgemeiner Betriebsmodi mit lediglich natürlicher/ohne durch den Lüfter erzwungener Konvektion ausgebildet sein. Die Betriebsmodi, bei denen eine Umwälzung des Gasgemischs in dem Behandlungsraum vorgesehen ist, können bei einem derartigen erfindungsgemäßen Gerät beispielsweise als Umluft-Betriebsmodi ausgebildet sein.

Somit kann die Aufnahmeleistung des elektrischen Motors des Lüfters, also die elektrische Aufnahmeleistung des Lüfters, in allen Betriebsmodi des erfindungsgemäßen Betriebsverfahrens für das erfindungsgemäße Gerät verwendet werden, um beispielsweise die Feuchte des Gasgemischs in dem Behandlungsraum ohne expliziten Feuchtesensor zu bestimmen. Dieses Gasgemisch kann beispielsweise Umgebungsluft oder ein Gasgemisch aus Umgebungsluft und Wasserdampf, kurz Dampf, sein. Hierbei liegt die Erkenntnis zugrunde, dass die Aufnahmeleistung des elektrischen Motors proportional zur Dichte des Gasgemischs in dem Behandlungsraum ist. Aus der Dichte dieses Gasgemischs lässt sich bei einer bekannten Temperatur dieses Gasgemischs sowie bekanntem Luftdruck und bekannter Motordrehzahl die Feuchte dieses Gasgemischs und damit die Feuchte in dem Behandlungsraum des Geräts bestimmen.

Grundsätzlich ist das erfindungsgemäße Betriebsverfahren in weiten geeigneten Grenzen frei wählbar.

Eine vorteilhafte Weiterbildung des erfindungsgemäßen Betriebsverfahrens sieht vor, dass in dem Messbetrieb des Lüfters die Umwälzung des Gasgemischs in dem Behandlungsraum im Vergleich zu dem Regelbetrieb des Lüfters derart reduziert ist, dass ein Behandlungsergebnis bei Durchführung des dazu korrespondierenden Betriebsmodus im Wesentlichen einem Behandlungsergebnis bei Durchführung des gleichen Betriebsmodus bei ausgeschaltetem Lüfter entspricht. Hierdurch ist, trotz des Messbetriebs des Lüfters, ein Behandlungsergebnis erzielbar, das im Wesentlichen dem Behandlungsergebnis des gleichen Betriebsmodus bei ausgeschaltetem Lüfter entspricht.

Eine weitere vorteilhafte Weiterbildung des erfindungsgemäßen Betriebsverfahrens sieht vor, dass in dem Messbetrieb des Lüfters die Umwälzung des Gasgemischs in dem Behandlungsraum durch den Lüfter mittels erzwungener Konvektion im Wesentlichen gleich Null ist. Oder mit anderen Worten soll durch den Messbetrieb der jeweilige Betriebsmodus möglichst wenig beeinflusst werden, so dass die diesem Betriebsmodus ggf. eigene Zirkulation mittels natürlicher/nicht erzwungener Konvektion im Wesentlichen unverändert erhalten bleibt. Auf diese Weise ist eine etwaige negative Beeinflussung eines Behandlungsergebnisses bei der Durchführung eines Betriebsmodus unter Nutzung des Messbetriebs des Lüfters im Wesentlichen verhindert.

Eine andere vorteilhafte Weiterbildung des erfindungsgemäßen Betriebsverfahrens sieht vor, dass zwecks Reduzierung einer Umwälzung des Gasgemischs in dem Behandlungsraum in dem Messbetrieb des Lüfters ein Lüfterrad des Lüfters in einer zu einer Drehrichtung des Lüfterrads in dem Regelbetrieb des Lüfters entgegengesetzten Drehrichtung gedreht wird. Hierdurch ist das erfindungsgemäße Betriebsverfahren auf konstruktiv, fertigungstechnisch und schaltungstechnisch besonders einfache Art und Weise realisierbar.

Entsprechend sieht eine vorteilhafte Weiterbildung des erfindungsgemäßen Geräts vor, dass der Lüfter derart ausgebildet und eingerichtet ist, dass ein Lüfterrad des Lüfters in dem Messbetrieb des Lüfters in einer zu einer Drehrichtung des Lüfterrads in dem Regelbetrieb des Lüfters entgegengesetzten Drehrichtung drehbar ist, wobei das Lüfterrad derart konstruiert ist, dass bei sonst gleichen Betriebsbedingungen der mit dem Lüfterrad förderbare Volumenstrom des Gasgemischs bei der zu dem Messbetrieb korrespondierenden Drehrichtung des Lüfterrads kleiner als bei der zu dem Regelbetrieb korrespondierenden Drehrichtung ist.

Eine zu der letztgenannten Weiterbildung des erfindungsgemäßen Betriebsverfahrens alternative oder zusätzliche vorteilhafte Weiterbildung des erfindungsgemäßen Betriebsverfahrens sieht vor, dass das von dem Lüfter geförderte Gasgemisch derart geführt wird, dass ein mittels des Lüfters in dessen Messbetrieb durch den Behandlungsraum förderbarer Volumenstrom des Gasgemischs kleiner als ein in dessen Regelbetrieb durch den Behandlungsraum förderbarer Volumenstrom des Gasgemischs ist. Auf diese Weise ist das erfindungsgemäße Betriebsverfahren ebenfalls auf konstruktiv, fertigungstechnisch und schaltungstechnisch besonders einfache Art und Weise umsetzbar.

Entsprechend sieht eine vorteilhafte Weiterbildung des erfindungsgemäßen Geräts vor, dass eine Strömungsführung des Geräts für die Führung des von dem Lüfter geförderten Gasgemischs derart ausgebildet ist, dass ein mittels des Lüfters in dessen Messbetrieb durch den Behandlungsraum förderbarer Volumenstrom des Gasgemischs kleiner als ein in dessen Regelbetrieb durch den Behandlungsraum förderbarer Volumenstrom des Gasgemischs ist.

Eine weitere vorteilhafte Weiterbildung des erfindungsgemäßen Betriebsverfahrens sieht vor, dass ein Elektromotor des Lüfters zum Antrieb eines Lüfterrads des Lüfters mittels einer Steuerung des Geräts derart angesteuert wird, dass der Elektromotor in dem Messbetrieb des Lüfters getaktet eingeschaltet und ausgeschaltet wird, bevorzugt, innerhalb eines Zeitraums von mehreren Minuten lediglich für einen Zeitraum von weniger als 30 Sekunden eingeschaltet wird, besonders bevorzugt, dass der Elektromotor alle drei Minuten für 20 Sekunden eingeschaltet wird. Hierdurch ist das erfindungsgemäße Betriebsverfahren beispielsweise auf rein schaltungstechnische Art und Weise realisierbar, so dass auch bereits vorhandene Geräte mit einem Lüfter, im Wesentlichen ohne bauliche Anpassungen, zu erfindungsgemäßen Geräten transformierbar sind. Besonders und insbesondere für die Praxis vorteilhafte Ausbildungen der Taktung gemäß der vorliegenden Weiterbildung ergeben sich aus der bevorzugten und insbesondere aus der besonders bevorzugten Ausführungsform dieser Weiterbildung.

Eine vorteilhafte Weiterbildung der vorgenannten Weiterbildung des erfindungsgemäßen Betriebsverfahrens sieht vor, dass die Taktung des Elektromotors des Lüfters in Abhängigkeit des jeweiligen zu dem Messbetrieb des Lüfters korrespondierenden Betriebsmodus erfolgt. Auf diese Weise ist der Betrieb des Lüfters während dessen Messbetrieb auf die Erfordernisse des jeweiligen Betriebsmodus des erfindungsgemäßen Betriebsverfahrens anpassbar.

Eine vorteilhafte Weiterbildung der letztgenannten Weiterbildung des erfindungsgemäßen Betriebsverfahrens sieht vor, dass mindestens ein zu dem Messbetrieb korrespondierender Betriebsmodus vorliegt, bei dem die Taktung des Elektromotors des Lüfters während des gesamten Messbetriebs des Lüfters konstant ist und/oder, dass mindestens ein zu dem Messbetrieb korrespondierender Betriebsmodus vorliegt, bei dem die Taktung des Elektromotors des Lüfters während des Messbetriebs des Lüfters verändert wird. Dadurch kann in Betriebsphasen, in denen beispielsweise viele Messwerte zur Feuchteermittlung benötigt werden, eine höhere Taktung und in Betriebsphasen, in denen wenig bis keine Messwerte zur Feuchteermittlung benötigt werden, eine geringe Taktung bis hin zu einem ausgeschalteten Elektromotor des Lüfters genutzt werden. Hierdurch ist für jede Art von Betriebsmodus des erfindungsgemäßen Betriebsverfahrens eine geeignete Taktung des Elektromotors konfigurierbar.

Ferner sieht eine vorteilhafte Weiterbildung des erfindungsgemäßen Betriebsverfahrens vor, dass eine Drehzahl des Lüfterrads des Lüfters in dem Messbetrieb des Lüfters kleiner als in dem Regelbetrieb des Lüfters ist. Auf diese Weise ist eine zu den vorgenannten Ausführungsformen des erfindungsgemäßen Betriebsverfahrens alternative oder zusätzliche Möglichkeit angegeben, um einen Betriebsmodus, bei dem grundsätzlich keine Umwälzung des Gasgemischs gewünscht ist, also eine derartige Umwälzung grundsätzlich nicht vorgesehen ist, mit dem Lüfter im Messbetrieb zu betreiben, ohne dass dabei die Qualität der Behandlung und damit das Behandlungsergebnis wesentlich leidet.

Entsprechend sieht eine vorteilhafte Weiterbildung des erfindungsgemäßen Geräts vor, dass ein Elektromotor des Lüfters zum Antrieb eines Lüfterrads des Lüfters mittels der Steuerung des Geräts derart ansteuerbar ist, dass der Elektromotor in dem Messbetrieb des Lüfters getaktet einschaltbar und ausschaltbar ist und/oder, dass eine Drehzahl des Lüfterrads des Lüfters in dem Messbetrieb des Lüfters kleiner als in dem Regelbetrieb des Lüfters ist.

Das erfindungsgemäße Gerät ist nach Art, Funktionsweise, Material und Dimensionierung in weiten geeigneten Grenzen frei wählbar.

Beispielsweise sieht eine weitere vorteilhafte Weiterbildung des erfindungsgemäßen Geräts vor, dass das Gerät als ein Gargerät, bevorzugt als ein Backofen, ein Dampfgarer, ein Mikrowellengargerät oder ein Kombinationsgerät mit einer Strahlungsbeheizung und einem Dampferzeuger, ausgebildet ist. Hierdurch sind Geräte angegeben, bei denen die Erfindung besonders sinnvoll und nutzbringend einsetzbar ist. Dies deshalb, weil die Feuchte in einem als Garraum ausgebildeten Behandlungsraum für einen in dem Garraum ablaufenden Garvorgang von besonderer Wichtigkeit ist. Jedoch sind auch andere Ausbildungen des erfindungsgemäßen Geräts denkbar. Rein exemplarisch sei hier lediglich auf Geschirrspüler und Wäschetrockner hingewiesen. Das erfindungsgemäße Gerät, beispielsweise das als ein Gargerät ausgebildete erfindungsgemäße Gerät, kann dabei als ein Haushaltsgerät oder als ein gewerbliches Gerät, also ein Gerät für den professionellen Einsatz, ausgebildet sein.

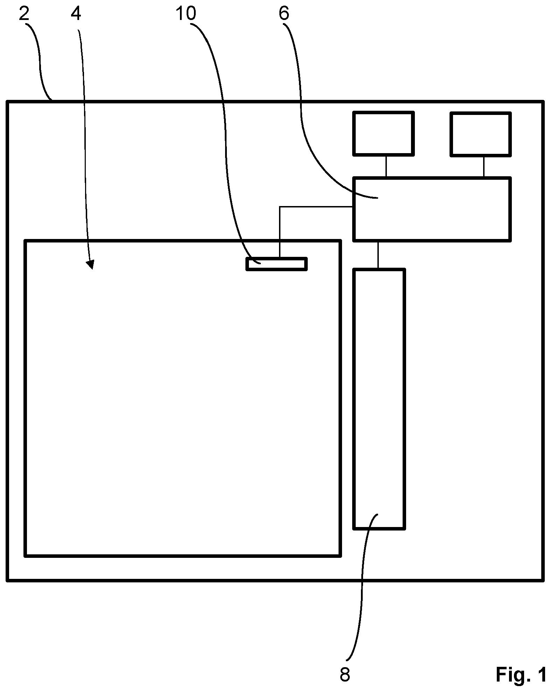

Ein Ausführungsbeispiel der Erfindung ist in den Zeichnungen rein schematisch dargestellt und wird nachfolgend näher beschrieben. Es zeigt die einzige Figur
- Figur 1: ein Ausführungsbeispiel des erfindungsgemäßen Geräts zur Durchführung des erfindungsgemäßen Betriebsverfahrens.

In der Fig. 1 ist ein Ausführungsbeispiel des erfindungsgemäßen Geräts zur Durchführung des erfindungsgemäßen Betriebsverfahrens rein exemplarisch dargestellt.

Das hier beispielhaft als Haushaltsdampfgarer ausgebildete Gerät 2 weist einen als Garraum ausgebildeten Behandlungsraum 4 für ein zu behandelndes Gut, nämlich ein nicht dargestelltes Gargut, auf. Ferner weist das Gerät 2 eine Steuerung 6, einen mit der Steuerung 6 signalübertragend verbundenen Lüfter 8 zur Umwälzung des (nicht dargestellten) Gasgemischs in dem Behandlungsraum 4, nämlich einem Luft-WasserGemisch, und einem mit der Steuerung 6 signalübertragend verbundenen Temperatursensor 10 zur Messung einer Temperatur des Gasgemischs auf. Der Lüfter 8 weist hier einen als BLDC-Motor ausgebildeten, mit der Steuerung 6 signalübertragend und leistungsübertragend verbundenen, nicht dargestellten elektrischen Antriebsmotor auf. Der Ausdruck "BLDC-Motor" steht dabei für einen bürstenlosen Gleichstrommotor.

Der Lüfter 8 gemäß einer ersten Variante des Geräts 2 ist hier derart ausgebildet und eingerichtet, dass ein nicht dargestelltes Lüfterrad des Lüfters 8 in dem Messbetrieb des Lüfters 8 in einer zu einer Drehrichtung des Lüfterrads in dem Regelbetrieb des Lüfters 8 entgegengesetzten Drehrichtung drehbar ist, wobei das Lüfterrad derart konstruiert ist, dass bei sonst gleichen Betriebsbedingungen der mit dem Lüfterrad förderbare Volumenstrom des Gasgemischs bei der zu dem Messbetrieb korrespondierenden Drehrichtung des Lüfterrads kleiner als bei der zu dem Regelbetrieb korrespondierenden Drehrichtung ist.

Gemäß einer zweiten Variante des Geräts 2 ist eine nicht dargestellte Strömungsführung des Geräts 2 für die Führung des von dem Lüfter 8 geförderten Gasgemischs derart ausgebildet, dass ein mittels des Lüfters 8 in dessen Messbetrieb durch den Behandlungsraum 4 förderbare Volumenstrom des Gasgemischs kleiner als ein in dessen Regelbetrieb durch den Behandlungsraum 4 förderbarer Volumenstrom des Gasgemischs ist.

Ferner ist der Elektromotor des Lüfters 8 zum Antrieb des Lüfterrads des Lüfters 8 gemäß einer dritten Variante des Geräts 2 mittels der Steuerung 6 des Geräts 2 derart ansteuerbar, dass der Elektromotor in dem Messbetrieb des Lüfters 8 getaktet einschaltbar und ausschaltbar ist und/oder, dass eine Drehzahl des Lüfterrads des Lüfters 8 in dem Messbetrieb des Lüfters 8 kleiner als in dem Regelbetrieb des Lüfters 8 ist.

Nachfolgend werden die Funktionsweise des erfindungsgemäßen Geräts und das erfindungsgemäße Betriebsverfahren gemäß dem vorliegenden Ausführungsbeispiel anhand der Fig. 1 näher erläutert.

Das Gerät 2 wurde an den Endkunden ausgeliefert und an einem nicht dargestellten Aufstellort des Geräts 2 für einen Betrieb des Geräts 2 aufgestellt.

Bei einer Inbetriebnahme des Geräts 2 an dem Aufstellort des Geräts 2 wird nun das erfindungsgemäße Betriebsverfahren wie folgt durchgeführt:
Das Gerät 2 wird zumindest teilweise in Abhängigkeit einer Relation zwischen einer elektrischen Aufnahmeleistung des Lüfters 8 und einer Dichte des Gasgemischs betrieben (wobei "betrieben" im Sinne der vorliegenden Anmeldung auch lediglich eine Anzeige der Feuchtigkeit für den Benutzer bedeuten kann), wobei das Betriebsverfahren eine Mehrzahl von Betriebsmodi umfasst und lediglich bei einem Teil dieser Betriebsmodi ein Regelbetrieb des Lüfters 8 zur Umwälzung des Gasgemischs in dem Behandlungsraum 4 gewünscht ist, also vorgesehen ist.

Erfindungsgemäß wird der Lüfter 8 in dem mindestens einen Betriebsmodi, in dem eine Umwälzung des Gasgemischs in dem Behandlungsraum 4 nicht gewünscht ist, in einem Messbetrieb betrieben, in dem die vorgenannte Relation ermittelbar und für den Betrieb des Geräts 2 nutzbar ist und gleichzeitig eine Umwälzung des Gasgemischs in dem Behandlungsraum 4 kleiner als bei dem Regelbetrieb des Lüfters 8 ist.

Somit kann die Aufnahmeleistung des Elektromotors des Lüfters 8, also die elektrische Aufnahmeleistung des Lüfters 8, in allen Betriebsmodi des erfindungsgemäßen Betriebsverfahrens für das erfindungsgemäße Gerät 2 verwendet werden, um beispielsweise die Feuchte des Gasgemischs in dem Behandlungsraum 4 ohne expliziten Feuchtesensor zu bestimmen. Dieses Gasgemisch kann beispielsweise Umgebungsluft oder ein Gasgemisch aus Umgebungsluft und Wasserdampf, kurz Dampf, sein. Hierbei liegt die Erkenntnis zugrunde, dass die Aufnahmeleistung des Elektromotors proportional zur Dichte des Gasgemischs in dem Behandlungsraum 4 ist. Aus der Dichte dieses Gasgemischs lässt sich bei einer bekannten Temperatur dieses Gasgemischs sowie bekanntem Luftdruck und bekannter Motordrehzahl die Feuchte dieses Gasgemischs und damit die Feuchte in dem Behandlungsraum 4 des Geräts 2 bestimmen. Die vorgenannte Temperatur ist auf dem Fachmann an sich bekannte Art mittels des Temperatursensors 10, alternativ auch mehrerer Temperatursensoren oder aus einem Modell, ermittelbar und auf die oben genannte Weise nutzbar.

Die Feuchteermittlung mittels des vorgenannten Elektromotors funktioniert also indirekt über die elektrische Leistungsaufnahme des Elektromotors. Ein expliziter Feuchtesensor ist somit nicht erforderlich. Bei einer festgelegten Drehzahl des Elektromotors verändert sich die elektrische Leistungsaufnahme durch Änderungen in der Dichte des Gasgemischs. Diese Dichte wiederum ändert sich mit der Lufttemperatur, dem Luftdruck und der Feuchtigkeit des Gasgemischs. Sind bis auf diese Feuchtigkeit alle Faktoren bekannt, kann die Feuchtigkeit des Gasgemischs anhand der elektrischen Leistungsaufnahme des vorgenannten Elektromotors berechnet werden. Um den Elektromotor auch als Feuchtesensor einsetzen zu können, muss dieser in einer festgelegten Drehzahl im eingeschwungenen Zustand betrieben werden. Dieser Zustand ist in dem Gerät 2 nicht zwingend gegeben. In Betriebsarten, wie zum Beispiel Oberhitze, Grillfunktion und/oder Unterhitze, allgemein in Betriebsmodi ohne erzwungene Konvektion, soll das nicht dargestellte Gargut hauptsächlich durch Strahlungswärme erwärmt werden. Um auch in diesen Betriebsarten, also Betriebsmodi des erfindungsgemäßen Betriebsverfahrens gemäß dem vorliegenden Ausführungsbeispiel, den Elektromotor des Lüfters 8 als Sensor zur Feuchteermittlung nutzen zu können, muss er eingeschaltet sein. Gleichzeitig soll der eingeschaltete Lüfter 8 in den vorgenannten Betriebsmodi das Behandlungsergebnis möglichst nicht (negativ) beeinflussen.

Dies wird nun gemäß dem vorliegenden Ausführungsbeispiel wie nachfolgend ausgeführt erreicht:
Gemäß dem hier vorliegenden Betriebsverfahren ist in dem Messbetrieb des Lüfters 8 die Umwälzung des Gasgemischs in dem Behandlungsraum 4 im Vergleich zu dem Regelbetrieb des Lüfters 8 derart reduziert, dass ein Behandlungsergebnis bei Durchführung des dazu korrespondierenden Betriebsmodus im Wesentlichen einem Behandlungsergebnis bei Durchführung des gleichen Betriebsmodus bei ausgeschaltetem Lüfter 8 entspricht.

Insbesondere ist dies erreicht, wenn die Umwälzung des Gasgemischs in dem Behandlungsraum 4 mittels durch den Lüfter erzwungener Konvektion in dem Messbetrieb des Lüfters 8 im Wesentlichen gleich Null ist.

Hierfür kann gemäß einer zu der ersten Variante des Geräts 2 korrespondierenden ersten Variante des vorliegenden Betriebsverfahrens vorgesehen sein, dass zwecks Reduzierung einer Umwälzung des Gasgemischs in dem Behandlungsraum 4 in dem Messbetrieb des Lüfters 8 das Lüfterrad des Lüfters 8 in einer zu einer Drehrichtung des Lüfterrads in dem Regelbetrieb des Lüfters 8 entgegengesetzten Drehrichtung gedreht wird.

Alternativ oder zusätzlich dazu sieht eine zu der zweiten Variante des Geräts 2 korrespondierende zweite Variante des vorliegenden Betriebsverfahrens vor, dass das von dem Lüfter 8 geförderte Gasgemisch derart geführt wird, dass ein mittels des Lüfters 8 in dessen Messbetrieb durch den Behandlungsraum 4 förderbarer Volumenstrom des Gasgemischs kleiner als ein in dessen Regelbetrieb durch den Behandlungsraum 4 förderbarer Volumenstrom des Gasgemischs ist.

Alternativ oder zusätzlich zu der ersten und/oder der zweiten Variante sieht eine zu der dritten Variante des Geräts 2 korrespondierende dritte Variante des vorliegenden Betriebsverfahrens vor, dass der Elektromotor des Lüfters 8 zum Antrieb des Lüfterrads des Lüfters 8 mittels der Steuerung 6 des Geräts 2 derart angesteuert wird, dass der Elektromotor in dem Messbetrieb des Lüfters 8 getaktet eingeschaltet und ausgeschaltet wird, wobei der Elektromotor innerhalb eines Zeitraums von mehreren Minuten lediglich für einen Zeitraum von weniger als 30 Sekunden eingeschaltet wird. Bei dem vorliegenden Ausführungsbeispiel des erfindungsgemäßen Betriebsverfahrens ist es beispielsweise vorgesehen, dass der Elektromotor des Lüfters 8 alle drei Minuten für 20 Sekunden eingeschaltet wird.

Die Taktung des Elektromotors des Lüfters 8 kann dabei in Abhängigkeit des jeweiligen zu dem Messbetrieb des Lüfters 8 korrespondierenden Betriebsmodus erfolgen. Zum Beispiel kann es vorgesehen sein, dass mindestens ein zu dem Messbetrieb korrespondierender Betriebsmodus vorliegt, bei dem die Taktung des Elektromotors des Lüfters 8 während des gesamten Messbetriebs des Lüfters 8 konstant ist und/oder, dass mindestens ein zu dem Messbetrieb korrespondierender Betriebsmodus vorliegt, bei dem die Taktung des Elektromotors des Lüfters 8 während des Messbetriebs des Lüfters 8 verändert wird.

Alternativ oder zusätzlich zu den vorgenannten drei Varianten des hier vorliegenden Betriebsverfahrens kann es darüber hinaus vorgesehen sein, dass eine Drehzahl des Lüfterrads des Lüfters 8 in dem Messbetrieb des Lüfters 8 kleiner als in dem Regelbetrieb des Lüfters 8 ist.

Aufgrund der erfindungsgemäßen Ausbildung des Betriebsverfahrens und des Geräts 2 ist es möglich, die Feuchte des Gasgemischs, beispielsweise eines Luft-Wasser-Gemisches, in dem Behandlungsraum 4, nämlich des Garraums das als Gargerät ausgebildeten Geräts 2, auch in Betriebsmodi des erfindungsgemäßen Betriebsverfahrens, bei denen eine Umwälzung in dem Behandlungsraum 4 nicht gewünscht ist, also grundsätzlich nicht vorgesehen ist, ebenfalls mittels der während des Regelbetriebs des Lüfters 8, also in Betriebsmodi, bei denen eine Umwälzung in dem Behandlungsraum 4 gewünscht ist, also explizit vorgesehen ist, verwendeten elektrischen Leistungsaufnahme des Elektromotors des Lüfters 8, zum Beispiel zur automatischen Ermittlung der Feuchte in dem Behandlungsraum 4 des Geräts 2, zu ermitteln. Gleichzeitig kann mithilfe der Erfindung aber das grundsätzliche Gepräge, also die grundsätzliche Charakteristik dieser Betriebsmodi, bei denen die vorgenannte Umwälzung des Gasgemischs durch erzwungene Konvektion nicht erwünscht ist, also grundsätzlich nicht vorgesehen ist, beibehalten werden (d.h. lediglich durch natürliche/nicht erzwungene Konvektion eine Zirkulation erfolgen kann). Entsprechend ist auch für diese Betriebsmodi des Betriebsverfahrens gemäß dem vorliegenden Ausführungsbeispiel kein expliziter Feuchtesensor zur Ermittlung der Feuchte des Gasgemischs erforderlich. Bei dem als Gargerät ausgebildeten erfindungsgemäßen Gerät 2 mit dem als Garraum ausgebildeten Behandlungsraum 4 können die Betriebsmodi, bei denen eine Umwälzung des Gasgemischs in dem Behandlungsraum 4 grundsätzlich nicht vorgesehen ist, wie oben erläutert, beispielsweise als ein Oberhitze-Betriebsmodus, Grill-Betriebsmodus und/oder als ein Unterhitze-Betriebsmodus ausgebildet sein. Die Betriebsmodi, bei denen eine Umwälzung des Gasgemischs in dem Behandlungsraum 4 vorgesehen ist, können bei dem Gerät 2 beispielsweise als Umluft-Betriebsmodi ausgebildet sein.

Vorteilhaft an der Erfindung gemäß dem vorliegenden Ausführungsbeispiel ist, dass der Elektromotor des Lüfters 8 auch in Betriebsarten, also Betriebsmodi des erfindungsgemäßen Betriebsverfahrens, mit natürlicher Konvektion als Sensor zur Feuchteermittlung verwendet werden kann. Obwohl der Elektromotor des Lüfters 8 verwendet wird, wird die Betriebsart, also der Betriebsmodus, nur gering beeinflusst, sodass auch nur ein geringer bis kein Einfluss auf das Garergebnis, also das Behandlungsergebnis, besteht. Der Endkunde erhält so sein gewünschtes Garergebnis in Abhängigkeit des gewählten Betriebsmodus des Betriebsverfahrens unter Nutzung der Feuchteermittlung im Gerät 2 ohne Verwendung eines expliziten Feuchtesensors.

Die Erfindung ist jedoch nicht auf das vorliegende Ausführungsbeispiel beschränkt. Siehe hierzu beispielsweise die diesbezüglichen Ausführungen in der Beschreibungseinleitung sowie die entsprechenden Angaben zu den einzelnen Varianten in der Erläuterung des konkreten Ausführungsbeispiels.

## Patentansprüche

1. Betriebsverfahren für ein Gerät (2) mit einem Lüfter (8) zur Umwälzung eines Gasgemischs in dem Behandlungsraum (4) des Geräts (2), wonach das Gerät (2) zumindest teilweise in Abhängigkeit einer Relation zwischen einer elektrischen Aufnahmeleistung des Lüfters (8) und einer Dichte des Gasgemischs betrieben wird, wobei das Betriebsverfahren eine Mehrzahl von Betriebsmodi umfasst und lediglich bei einem Teil dieser Betriebsmodi ein Regelbetrieb des Lüfters (8) zur Umwälzung des Gasgemischs in dem Behandlungsraum (4) gewünscht ist, **dadurch gekennzeichnet, dass** der Lüfter (8) in dem mindestens einen Betriebsmodi, in dem eine Umwälzung des Gasgemischs in dem Behandlungsraum (4) nicht gewünscht ist, in einem Messbetrieb betrieben wird, in dem die Relation zwischen der elektrischen Aufnahmeleistung des Lüfters (8) und der Dichte des Gasgemischs ermittelbar und für den Betrieb des Geräts (2) nutzbar ist und gleichzeitig eine Umwälzung des Gasgemischs in dem Behandlungsraum (4) kleiner als bei dem Regelbetrieb des Lüfters (8) ist.

2. Betriebsverfahren nach Anspruch 1, **dadurch gekennzeichnet, dass** in dem Messbetrieb des Lüfters (8) die Umwälzung des Gasgemischs in dem Behandlungsraum (4) im Vergleich zu dem Regelbetrieb des Lüfters (8) derart reduziert ist, dass ein Behandlungsergebnis bei Durchführung des dazu korrespondierenden Betriebsmodus im Wesentlichen einem Behandlungsergebnis bei Durchführung des gleichen Betriebsmodus bei ausgeschaltetem Lüfter (8) entspricht.

3. Betriebsverfahren nach Anspruch 1 oder 2, **dadurch gekennzeichnet, dass** in dem Messbetrieb des Lüfters (8) die Umwälzung des Gasgemischs in dem Behandlungsraum (4) im Wesentlichen gleich Null ist.

4. Betriebsverfahren nach einem der Ansprüche 1 bis 3, **dadurch gekennzeichnet, dass** zwecks Reduzierung der Umwälzung des Gasgemischs in dem Behandlungsraum (4) in dem Messbetrieb des Lüfters (8) ein Lüfterrad des Lüfters (8) in einer zu einer Drehrichtung des Lüfterrads in dem Regelbetrieb des Lüfters (8) entgegengesetzten Drehrichtung gedreht wird.

5. Betriebsverfahren nach einem der Ansprüche 1 bis 4, **dadurch gekennzeichnet, dass** das von dem Lüfter (8) geförderte Gasgemisch derart geführt wird, dass die Umwälzung des Gasgemischs in dem Behandlungsraum (4) mittels des Lüfters (8) in dessen Messbetrieb kleiner als die Umwälzung des Gasgemischs in dem Behandlungsraum (4) in dessen Regelbetrieb ist.

6. Betriebsverfahren nach einem der Ansprüche 1 bis 5, **dadurch gekennzeichnet, dass** ein Elektromotor des Lüfters (8) zum Antrieb des Lüfterrads des Lüfters (8) mittels einer Steuerung (6) des Geräts (2) derart angesteuert wird, dass der Elektromotor in dem Messbetrieb des Lüfters (8) getaktet eingeschaltet und ausgeschaltet wird, bevorzugt, innerhalb eines Zeitraums von mehreren Minuten lediglich für einen Zeitraum von weniger als 30 Sekunden eingeschaltet wird, besonders bevorzugt, dass der Elektromotor alle drei Minuten für 20 Sekunden eingeschaltet wird.

7. Betriebsverfahren nach Anspruch 6, **dadurch gekennzeichnet, dass** die Taktung des Elektromotors des Lüfters (8) in Abhängigkeit des jeweiligen zu dem Messbetrieb des Lüfters (8) korrespondierenden Betriebsmodus erfolgt.

8. Betriebsverfahren nach Anspruch 7, **dadurch gekennzeichnet, dass** mindestens ein zu dem Messbetrieb korrespondierender Betriebsmodus vorliegt, bei dem die Taktung des Elektromotors des Lüfters (8) während des gesamten Messbetriebs des Lüfters (8) konstant ist und/oder, dass mindestens ein zu dem Messbetrieb korrespondierender Betriebsmodus vorliegt, bei dem die Taktung des Elektromotors des Lüfters (8) während des Messbetriebs des Lüfters (8) verändert wird.

9. Betriebsverfahren nach einem der Ansprüche 1 bis 8, **dadurch gekennzeichnet, dass** eine Drehzahl des Lüfterrads des Lüfters (8) in dem Messbetrieb des Lüfters (8) kleiner als in dem Regelbetrieb des Lüfters (8) ist.

10. Gerät (2) mit einem Behandlungsraum (4) für ein zu behandelndes Gut, einer Steuerung (6), einem mit der Steuerung (6) signalübertragend verbundenen Lüfter (8) zur Umwälzung des Gasgemischs in dem Behandlungsraum (4) und einem mit der Steuerung (6) signalübertragend verbundenen Temperatursensor (10) zur Messung einer Temperatur des Gasgemischs, **dadurch gekennzeichnet, dass** das Gerät (2) zur Durchführung des Betriebsverfahrens nach einem der Ansprüche 1 bis 9 ausgebildet und eingerichtet ist.

11. Gerät nach Anspruch 10, **dadurch gekennzeichnet, dass** der Lüfter (8) derart ausgebildet und eingerichtet ist, dass ein Lüfterrad des Lüfters (8) in dem Messbetrieb des Lüfters (8) in einer zu einer Drehrichtung des Lüfterrads in dem Regelbetrieb des Lüfters (8) entgegengesetzten Drehrichtung drehbar ist, wobei das Lüfterrad derart konstruiert ist, dass bei sonst gleichen Betriebsbedingungen der mit dem Lüfterrad förderbare Volumenstrom des Gasgemischs bei der zu dem Messbetrieb korrespondierenden Drehrichtung des Lüfterrads kleiner als bei der zu dem Regelbetrieb korrespondierenden Drehrichtung ist.

12. Gerät (2) nach Anspruch 10 oder 11, **dadurch gekennzeichnet, dass** eine Strömungsführung des Geräts (2) für die Führung des von dem Lüfter (8) geförderten Gasgemischs derart ausgebildet ist, dass ein mittels des Lüfters (8) in dessen Messbetrieb durch den Behandlungsraum (4) förderbarer Volumenstrom des Gasgemischs kleiner als ein in dessen Regelbetrieb durch den Behandlungsraum (4) förderbarer Volumenstrom des Gasgemischs ist.

13. Gerät (2) nach einem der Ansprüche 10 bis 12, **dadurch gekennzeichnet, dass** ein Elektromotor des Lüfters (8) zum Antrieb eines Lüfterrads des Lüfters (8) mittels der Steuerung (6) des Geräts (2) derart ansteuerbar ist, dass der Elektromotor in dem Messbetrieb des Lüfters (8) getaktet einschaltbar und ausschaltbar ist und/oder, dass eine Drehzahl des Lüfterrads des Lüfters (8) in dem Messbetrieb des Lüfters (8) kleiner als in dem Regelbetrieb des Lüfters (8) ist.

14. Gerät (2) nach einem der Ansprüche 10 bis 13, **dadurch gekennzeichnet, dass** das Gerät (2) als ein Gargerät, bevorzugt als ein Backofen, ein Dampfgarer, ein Mikrowellengargerät oder ein Kombinationsgerät mit einer Strahlungsbeheizung und einem Dampferzeuger ausgebildet ist.
